# Europäisches Patentamt

# European Patent Office

# Office européen des brevets

(19)

(11) Veröffentlichungsnummer: **0 014 255**
**B1**

(12) ## EUROPÄISCHE PATENTSCHRIFT

(45) Veröffentlichungstag der Patentschrift:
**18.11.81**

(51) Int. Cl.³: **C 22 B 1/243**, C 22 B 7/02

(21) Anmeldenummer: **79105244.2**

(22) Anmeldetag: **18.12.79**

(54) **Verfahren zur Verfestigung von zinkoxidhaltigen Flugstäuben.**

(30) Priorität: **02.02.79 DE 2903971**

(43) Veröffentlichungstag der Anmeldung:
**20.08.80 Patentblatt 80/17**

(45) Bekanntmachung des Hinweises auf die Patenterteilung:
**18.11.81 Patentblatt 81/46**

(84) Benannte Vertragsstaaten:
**AT BE CH FR IT NL SE**

(56) Entgegenhaltungen:
**CH-A-330 912**
**DE-B-1 047 445**
**DE-B-1 224 758**
**DE-B-1 140 592**
**DE-C-451 930**

(73) Patentinhaber: **Th. Goldschmidt AG,
Goldschmidtstrasse 100, D-4300 Essen (DE)**

(72) Erfinder: **Müller, Wolfgang, Dr., Relaisstrasse 179,
D-6800 Mannheim (DE)**
Erfinder: **Stroh, Arthur, Gartenstrasse 42, D-6831 Rohrhof
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Verfestigung von zinkoxidhaltigen Flugstäuben

Die Erfindung betrifft ein Verfahren zur Verfestigung von zinkoxidhaltigen Flugstäuben zu einer kompakten Masse.

In der buntmetallverarbeitenden Industrie fallen insbesondere beim Einschmelzen von Frischmetall oder beim Aufarbeiten von Rücklaufmetall feine hochvoluminöse Flugstäube an, die in nachgeschalteten üblichen Staubfilteranlagen zurückgehalten werden. Diese Stäube setzen sich hauptsächlich aus Zinkoxid (40 bis 75%), feinverteiltem Russ und zu einem geringen Teil aus weiteren Legierungsmetallen teils in oxidischer oder metallischer Form zusammen.

Beim Entleeren der Filteranlagen und beim Abfüllen der Stäube in die dafür vorgesehenen Behälter belästigen die immer wieder dabei aufwirbelnden Stäube in unangenehmer Weise die Umgebung. Dieses kann gesundheitliche Schädigungen nach sich ziehen. Dazu kommt, dass diese fein verteilten Flugstäube zur Selbstentzündung neigen und deshalb beim Wiederaufwirbeln zu Explosionen führen können. Ein weiterer Nachteil dieser Stäube ist ihr ausserordentlich niedriges Schüttgewicht. Sie nehmen aufgrund ihrer lockeren und sehr feinen Verteilung erheblichen Platz ein, so dass für den Abtransport relativ geringer Gewichtsmengen immer ein grosses Raumangebot zur Verfügung gestellt werden muss.

Es sind daher schon seit langem Bestrebungen vorhanden, die Staubbildung durch sogenannte Staubbindemittel einzudämmen und die Stäube zu verfestigen. Als Staubbindemittel für diese Materialien ist bisher in grossem Umfang Wasser verwendet worden, das jedoch nur für kurze Zeit nach dem Einbringen Abhilfe schafft, da nach dem Verdunsten des Wassers die Verfestigungswirkung nachlässt, so dass das feinteilige Metall wieder zur Staubbildung befähigt ist.

Der Erfindung liegt daher die Aufgabe zugrunde, ein Verfahren zu schaffen, mit dem es gelingt, die Staubbildung dauerhaft wirksam zu unterbinden, wobei die so verfestigten Stäube ein hohes Schüttgewicht erreichen und deshalb weniger aufwendig transportiert werden können.

Die Lösung dieser Aufgabe gelingt dadurch, dass die Stäube mit einer wässrigen, mineralsauren, gegebenenfalls ein Zinksalz dieser Säure enthaltenden Lösung behandelt werden.

Mit Hilfe dieses Verfahrens wird eine dauerhafte Verfestigung der Stäube zu einer kompakten Masse erreicht, welche nach dem Verdunsten des Wassers fest ist, kompakt bleibt und nicht wieder zur Staubbildung neigt. Das vorher niedrige Schüttgewicht ist durch die erfindungsgemässe Behandlung der Stäube mit der wässrigen, mineralsauren Zinksalzlösung verdrei- bis versechsfacht worden. Man kann deshalb erheblich mehr Flugstäube in den dafür vorgesehenen Behältern unterbringen und gefahrlos transportieren, da diese so verfestigten Stäube nicht mehr selbstentzündend sind.

Bevorzugt verwendet man 10 bis 25 Gew.-% der wässrigen, mineralsauren, gegebenenfalls ein Zinksalz dieser Säure enthaltenden Lösung (bezogen auf das Gewicht der Stäube), weil damit ein Optimum der Verfestigung und ein sehr hohes Schüttgewicht erreicht wird. Die unbehandelten Flugstäube haben ein Schüttgewicht, das in der Grössenordnung von 150 bis 250 g/l liegt. Nach der Behandlung mit der erfindungsgemässen Lösung liegen diese Gewichte bei 450 bis 1600 g/l. Die Behandlung der Flugstäube kann mit der bindenden Lösung durch Aufsprühen erfolgen. Die Stäube können auch in einer Mischschnecke mit der Lösung kompaktiert werden.

Es ist zweckmässig, die Behandlung der Stäube mit einer 5- bis 10gewichtsprozentigen wässrigen, mineralsauren Lösung vorzunehmen, da mit diesem Gehalt an Säure die wirtschaftlich besten Ergebnisse bei der Kompaktierung der Stäube erzielt werden. Dabei werden 5- bis 10gewichtsprozentige wässrige Säuren bevorzugt, die gegebenenfalls noch 17 bis 48 g/l Zink in Form des Salzes dieser Säure enthalten.

Besonders bevorzugt wird eine 5- bis 10gewichtsprozentige Salzsäurelösung verwendet, die 24 bis 48 g/l Zink als Zinkchlorid enthält. Mit dieser zinkchloridhaltigen, wässrigen Salzsäurelösung erhält man mit geringstem wirtschaftlichem Aufwand einen hochverfestigten Staub, der aufgrund seines hohen Schüttgewichtes gut abgefüllt und transportiert werden kann und lange Zeit staubfrei gelagert werden kann.

Es können ferner auch schwefelsaure Zinksulfatlösungen oder salpetersaure Zinknitratlösungen zum Einsatz kommen, die zu ähnlich positiven Ergebnissen in bezug auf Verfestigung und Staubfreiheit führen.

Anhand der folgenden Beispiele wird das erfindungsgemässe Verfahren näher erläutert, wobei hier vor allen Dingen die enorme Erhöhung des Schüttgewichtes gezeigt wird.

Beispiel 1

140 g zink- bzw. zinkoxidhaltiger Flugstäube mit einem Schüttgewicht von 190 g/l wurden mit folgenden Lösungen in einer Mischschnecke besprüht:

erhaltenes Schüttgewicht

mit 25 Gew.-% einer 10gewichtsprozentigen wässrigen Salzsäurelösung      583 g/l

mit 25 Gew.-% einer 5gewichtsprozentigen wässrigen Salzsäurelösung, die 24 g/l Zink in Form von Zinkchlorid enthielt      823 g/l

Beispiel 2

Die Stäube wurden in einem Gefäss vorgelegt. Unter Rühren wurde die Bindeflüssigkeit während 10 min zugetropft. Vor der Anwendung des erfindungsgemässen Verfahrens hatten die Stäube ein Schüttgewicht von 238 g/l. Nach der Behandlung mit 20 Gew.-% einer 10gewichtsprozentigen wässrigen Schwefelsäurelösung betrug das Schüttgewicht 1100 bis 1300 g/l; im Falle der Behandlung mit 20 Gew.-% einer 10gewichtsprozentigen wässrigen Salzsäurelösung wurde ein Schüttgewicht von 1300 bis 1600 g/l bestimmt.

## Patentansprüche

1. Verfahren zur Verfestigung von zinkoxidhaltigen Flugstäuben zu einer kompakten Masse, dadurch gekennzeichnet, dass die Stäube mit einer wässrigen, mineralsauren, gegebenenfalls ein Zinksalz dieser Säure enthaltenden Lösung behandelt werden.

2. Verfahren nach Anspruch 1, dadurch gekennzeichnet, dass die Stäube mit 10 bis 25 Gew.-% dieser Lösung, bezogen auf das Gewicht der Stäube, behandelt werden.

3. Verfahren nach Ansprüchen 1 und 2, dadurch gekennzeichnet, dass die Behandlung mit einer 5- bis 10gewichtsprozentigen wässrigen Säure durchgeführt wird.

4. Verfahren nach Anspruch 3, dadurch gekennzeichnet, dass als Säure Salzsäure, Schwefelsäure oder Salpetersäure verwendet wird.

5. Verfahren nach Ansprüchen 1 bis 3, dadurch gekennzeichnet, dass die Behandlung mit einer Säure durchgeführt wird, welche zusätzlich 17 bis 48 g/l Zink in Form des entsprechenden Zinksalzes dieser Säure enthält.

## Claims

1. Process for consolidating airborne dusts containing zinc oxide, to form a compact mass, characterized in that the dusts are treated with an aqueous solution, acidified by means of a mineral acid and, if appropriate, containing a zinc salt of this acid.

2. Process according to claim 1, characterized in that the dusts are treated with 10 to 25% by weight of this solution, relative to the weight of the dusts.

3. Process according to claims 1 and 2, characterized in that the treatment is carried out with the aid of an aqueous acid having a concentration of 5 to 10% by weight.

4. Process according to claim 3, characterized in that hydrochloric acid, sulphuric acid, or nitric acid is used as the acid.

5. Process according to claims 1 to 3, characterized in that the treatment is carried out with the aid of an acid which additionally contains 17 to 48 g/l of zinc, in the form of the corresponding zinc salt of this acid.

## Revendications

1. Procédé pour compacter et solidifier des poussières volantes contenant de l'oxyde de zinc pour les transformer en une masse compacte, caractérisé en ce que les poussières sont traitées avec une solution aqueuse d'un acide minéral contenant éventuellement un sel zincique de cet acide.

2. Procédé selon la revendication 1, caractérisé en ce que les poussières sont traitées avec 10 à 25% en poids de cette solution, cette proportion étant calculée par rapport au poids des poussières.

3. Procédé selon la revendication 1 ou 2, caractérisé en ce que le traitement est effectué avec une solution aqueuse d'acide à teneur de 5 à 10% en pids.

4. Procédé selon la revendication 3, caractérisé en ce qu'on utilise comme acide de l'acide chlorhydrique, de l'acide sulfurique ou de l'acide nitrique.

5. Procédé selon une quelconque des revendications 1 à 3, caractérisé en ce que le traitement est effectué avec un acide qui contient en supplément de 17 à 48 grammes par litre de zinc sous la forme du sel zincique correspondant de cet acide.